(19) Europäisches Patentamt
European Patent Office
Office européen des brevets

(11) **EP 4 375 890 A1**

(12) **EUROPEAN PATENT APPLICATION**
published in accordance with Art. 153(4) EPC

(43) Date of publication:
**29.05.2024  Bulletin 2024/22**

(21) Application number: **22845589.5**

(22) Date of filing: **01.02.2022**

(51) International Patent Classification (IPC):
**G06N 20/00** $^{(2019.01)}$    **G16Z 99/00** $^{(2019.01)}$

(52) Cooperative Patent Classification (CPC):
**G06N 20/00; G16Z 99/00**

(86) International application number:
**PCT/JP2022/003897**

(87) International publication number:
**WO 2023/002648 (26.01.2023 Gazette 2023/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  **23.07.2021  JP 2021121122**

(71) Applicant: **Sony Group Corporation**
**Tokyo 108-0075 (JP)**

(72) Inventors:
• **TSUJIKAWA, Tomonobu**
**Tokyo 108-0075 (JP)**
• **OOBUCHI, Yukio**
**Tokyo 108-0075 (JP)**
• **KOBAYASHI, Yoshiyuki**
**Tokyo 108-0075 (JP)**

(74) Representative: **2SPL Patentanwälte PartG mbB**
**Landaubogen 3**
**81373 München (DE)**

(54)   **INFORMATION PROCESSING METHOD AND INFORMATION PROCESSING SYSTEM**

(57)    An evaluation result of training data to be used to train a machine learning model is presented.

An information processing method that performs processing related to the training data to be used to train the machine learning model includes a determination step of determining a characteristic of each piece of the training data on the basis of an inference result of the machine learning model for the training data, and a presentation step of presenting the evaluation result of the training data based on the determined characteristic. In the determination step, a physical characteristic such as mass, a size, or acting force including attractive force and repulsive force of an object corresponding to the training data is determined on the basis of an expected value for each label output by the machine learning model for the training data.

*FIG. 1*

EP 4 375 890 A1

**Description**

TECHNICAL FIELD

The technology disclosed herein (hereinafter referred to as "present disclosure") relates to an information processing method and an information processing system that perform processing related to training of a machine learning model.

BACKGROUND ART

Artificial intelligence is capable of analyzing and estimating an enormous amount of data, and is utilized for, for example, image recognition, voice recognition, and natural language processing. The artificial intelligence is achieved by training a machine learning model that includes a neural network or the like. By performing deep learning using a huge amount of training data sets, it becomes possible to obtain artificial intelligence that carries out inference exceeding human ability. However, there is a problem that a process through which the artificial intelligence reaches an inference result is made into a black box and the basis of the determination is difficult to understand. Furthermore, in a case where training is carried out using unfair training data, such as biased training data, there is a concern that the training efficiency of the machine learning model is lowered or the machine learning model may not be trained to correctly perform inference.
Recently, Gradient-weighted Class Activation Mapping (Grad-CAM) and the like have been developed as a technique for visualizing a determination basis of a machine learning model having been subject to deep learning. For example, there has been proposed an analysis program described to generate a map indicating a degree of attention of each image portion of an erroneous inference image focused on at a time of inference by using the Grad-CAM method at a time of generating a refined image while changing the erroneous inference image, which is an input image when an erroneous label is inferred, such that a score of a correct answer label of the inference is maximized in an image recognition process (see Patent Document 1). Furthermore, there has been proposed a learning device that accumulates the number of times of correct answers of each piece of training data for a model and excludes the training data whose number of times of correct answers is equal to or greater than a threshold value from learning targets, thereby reducing a calculation amount required for the learning process (see Patent Document 2).

CITATION LIST

PATENT DOCUMENT

    Patent Document 1: Japanese Patent Application Laid-Open No. 2020-197875
    Patent Document 2: Japanese Patent Application Laid-Open No. 2018-194919

NON-PATENT DOCUMENT

    Non-Patent Document 1: Grad-CAM: Visual Explanations from Deep Networks via Gradient-based Localization <https://arxiv.org/abs/1610.02391>
    Non-Patent Document 2: "Why Should I Trust You?": Explaining the Predictions of Any Classifier <https://arxiv.org/abs/1602.04938>
    Non-Patent Document 3: Interpretability Beyond Feature Attribution: Quantitative Testing with Concept Activation Vectors (TCAV) <https://arxiv.org/pdf/1711.11279.pdf>

SUMMARY OF THE INVENTION

PROBLEMS TO BE SOLVED BY THE INVENTION

An object of the present disclosure is to provide an information processing method and an information processing system that perform processing related to training data used to train a machine learning model.

SOLUTIONS TO PROBLEMS

The present disclosure has been conceived in view of the problems described above, and a first aspect thereof is an information processing method that performs processing related to training data to be used to train a machine learning model, the method including:

a determination step of determining a characteristic of each piece of the training data on the basis of an inference result of the machine learning model for the training data; and
a presentation step of presenting an evaluation result of the training data based on the determined characteristic.

In the determination step, a physical characteristic of an object corresponding to each piece of the training data is determined on the basis of an expected value for each label output by the machine learning model for the training data, and physical simulation calculation between objects each having the determined physical characteristic is performed. Specifically, in the determination step, mass of the object corresponding to the training data is determined on the basis of magnitude of the expected value for a correct answer label, attractive force or repulsive force that acts between the objects corresponding to individual pieces of the training data is determined on the basis of matching/mismatching between the labels for which the expected value is high or the labels for which the expected value is low, and motion information of each object is calculated by the physical simulation calculation on the basis of those physical characteristics. Then, in the presentation step, each object displayed on a screen of a display device is moved on the basis of the motion information calculated in the determination step.

The information processing method according to the first aspect may further include an input step of inputting a user operation on the object displayed on the screen of the display device. A user may exclude the training data corresponding to the object for which a deletion operation is performed on the screen in the input step from a learning target of the machine learning model. In this manner, it becomes possible to create a custom data set for each user.

Furthermore, a second aspect of the present disclosure is an information processing system that performs processing related to training data to be used to train a machine learning model, the system including:

a determination unit that determines a characteristic of each piece of the training data on the basis of an inference result of the machine learning model for the training data; and
a presentation unit that presents an evaluation result of the training data based on the determined characteristic.

However, the term "system" referred to here indicates a logical assembly of multiple devices (or functional modules that implement specific functions), and it does not matter whether or not each of the devices or functional modules is in a single housing. That is, one device including multiple components or functional modules and an assembly of multiple devices correspond to the "system".

The determination unit determines a physical characteristic of an object corresponding to each piece of the training data on the basis of an expected value for each label output by the machine learning model for the training data, and performs physical simulation calculation between objects each having the determined physical characteristic, thereby calculating motion information of each object. Then, the presentation unit moves each object displayed on a screen of a display device on the basis of the motion information calculated in the determination step.

The information processing system according to the second aspect includes one or a plurality of devices. For example, an information processing apparatus includes a first device that includes the determination unit, and a second device that includes the presentation unit. The second device may include a display device that displays, on a screen, the evaluation result of the training data based on the determined characteristic, and an input unit that inputs a user operation on the screen. Furthermore, the information processing system may further include a third device that includes a model update unit that updates the machine learning model by training using the training data.

EFFECTS OF THE INVENTION

According to the present disclosure, it becomes possible to provide an information processing method and an information processing system that perform processing for presenting an evaluation result of training data to be used to train a machine learning model.

Note that the effects described herein are merely examples, and the effects exerted by the present disclosure are not limited thereto. Furthermore, the present disclosure may further exert additional effects in addition to the effects described above.

Still other objects, features, and advantages of the present disclosure will become apparent from more detailed descriptions based on an embodiment to be described later and the accompanying drawings.

BRIEF DESCRIPTION OF DRAWINGS

Fig. 1 is a diagram illustrating a functional configuration example of a learning system 100.

Fig. 2 is a diagram illustrating a configuration example of a machine learning model 200.

Fig. 3 is a diagram exemplifying transition of an inference result according to the number of times of training (number of epochs) of the machine learning model 200.

Fig. 4 is a diagram illustrating physical characteristics determined for the inference result for training data exemplified in Fig. 3.

Fig. 5 is a diagram exemplifying a mechanical model including objects corresponding to individual pieces of training data.

Fig. 6 is a diagram illustrating a configuration example of a GUI screen that displays an evaluation result of the training data used for the training of the machine learning model.

Fig. 7 is a diagram illustrating a state in which a GUI operation is performed on the GUI screen illustrated in Fig. 6.

Fig. 8 is a diagram illustrating a state in which the GUI operation is performed on the GUI screen illustrated in Fig. 6.

Fig. 9 is a diagram illustrating a state in which the evaluation result of the training data changes on the GUI screen during the training of the machine learning model.

Fig. 10 is a diagram illustrating an exemplary determination basis image with heat map display calculated on the basis of a Grad-CAM algorithm.

Fig. 11 is a diagram illustrating another exemplary determination basis image with heat map display calculated on the basis of the Grad-CAM algorithm.

Fig. 12 is a diagram illustrating an example of the GUI operation for displaying detailed information of the training data.

Fig. 13 is a diagram illustrating an example of the GUI operation for displaying detailed information of the training data.

Fig. 14 is a flowchart illustrating a processing procedure to be performed by a learning data evaluation unit 120.

Fig. 15 is a diagram illustrating a hardware configuration example of an information processing system 1500.

MODE FOR CARRYING OUT THE INVENTION

Hereinafter, the present disclosure will be described in the following order with reference to the drawings.
A. Overview
B. System configuration
C. Training data evaluation

C-1. Physical characteristic determination for training data
C-2. Presentation of evaluation result for training data
C-3. Presentation of determination basis of inference by machine learning model
C-4. Detailed information presentation method
C-5. Processing procedure

D. System configuration

A. Overview

Artificial intelligence includes, for example, a model using a type such as a neural network, support vector regression, or Gaussian process regression. While an embodiment using a model of a neural network type will be mainly described herein for convenience, the present disclosure is not limited to a specific model type, and may be applied to models other than the neural network in a similar manner. Use of the artificial intelligence includes a "learning phase" in which a model is learned and an "inference phase" in which inference is performed using the learned model. The inference includes recognition processing such as image recognition and voice recognition, and prediction processing for estimating and predicting an event. Hereinafter, an example of applying the artificial intelligence to a classification problem, such as image classification, will be mainly described.

In the learning phase of the artificial intelligence, a model is learned by a learning algorithm, such as backpropagation, such that a correct answer label corresponding to each piece of input data may be output using a data set including a combination of data to be input to the model (hereinafter also referred to as "input data") and a label desired to be estimated by the model for the input data. Then, in the inference phase of the artificial intelligence, a model learned in the learning phase (hereinafter also referred to as "learned model") outputs an appropriate label for input data.

It is considered that a model may be trained more efficiently by using training data having a larger influence on the model being trained. In view of the above, the present disclosure proposes a method and a system that evaluates training data during training of a model and presents an evaluation result to a user. The user mentioned here is specifically a developer of a machine learning model. In the present disclosure, ranking of each piece of training data is calculated and a relationship between pieces of the training data is evaluated as the evaluation of the training data, and such an evaluation result is presented to the user using a graphical user interface (GUI) screen of a computer. Therefore, the user is enabled to grasp that the training data to be used to train the machine learning model has a problem or select the training data having a problem through the GUI screen, which may reduce time loss caused by re-training. That is, the user is enabled to proceed with the training of the machine learning model while visually checking the influence of the training data.

B. System configuration

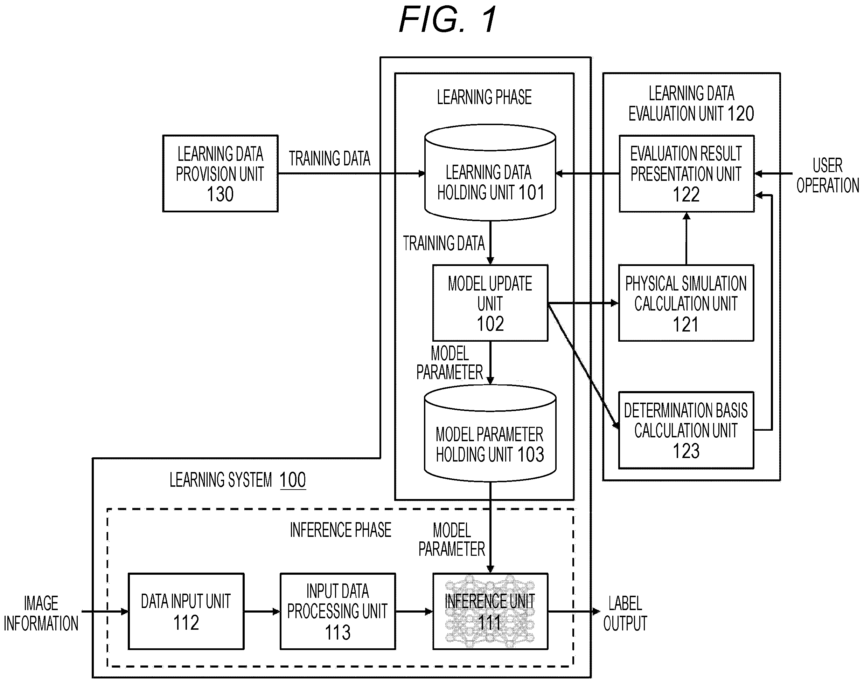

Fig. 1 illustrates a functional configuration example of a learning system 100 to which the present disclosure is applied. Although the illustrated learning system 100 is used by being installed on, for example, an edge device, some or all of functions of the learning system 100 may be constructed on a cloud or an arithmetic device capable of large-scale computation. Hereinafter, descriptions will be given on the assumption that the learning system 100 leans a machine learning model that mainly performs image classification, such as object recognition, face recognition, and the like. However, the present disclosure is not limited thereto, and the learning system 100 may learn a machine learning model that performs inference other than the image classification.

The illustrated learning system 100 includes a learning data holding unit 101, a model update unit 102, a model parameter holding unit 103, an inference unit 111, a data input unit 112, and an input data processing unit 113. Among those units, the learning data holding unit 101, the model update unit 102, and the model parameter holding unit 103 operate in the learning phase of the machine learning model, and the inference unit 111, the data input unit 112, and the input data processing unit 113 operate in the inference phase using the learned model. Although the learning system 100 is used by being installed on, for example, an edge device, some or all of the functions of the learning system 100 may be constructed on a cloud or an arithmetic device capable of large-scale computation.

Furthermore, in the present embodiment, the learning system 100 is further provided with a learning data provision unit 130 that provides training data to be used to learn the machine learning model, and a learning data evaluation unit 120 that evaluates the training data used to learn the machine learning model in the model update unit 102. The learning data evaluation unit 120 includes a physical simulation calculation unit 121, an evaluation result presentation unit 122, and a determination basis calculation unit 123. The learning data evaluation unit 120 may be the same system as the learning system 100, or may be a system independent from the learning system 100. Although the system implementing the learning data evaluation unit 120 is used by being installed on, for example, an edge device, some or all of functions of the system may be constructed on a cloud or an arithmetic device capable of large-scale computation.

The learning data provision unit 130 supplies training data to be used by the model update unit 102 for model learning. The training data includes a data set (x, y) obtained by combining input data x to be input to a model to be trained and a correct answer label y serving as a correct answer for the input data x. For example, in a case where the model update unit 102 learns a machine learning model for image classification, the learning data provision unit 130 provides training data including a combination of a captured image and a correct answer label (what is the subject of the captured image) in a case of a digital camera, for example. For example, the training data including images captured by each of a large number of digital cameras is provided to the learning system 100 via a wide area network such as the Internet.

The learning data holding unit 101 accumulates training data to be used by the model update unit 102 for model learning. Each piece of the training data includes a data set obtained by combining input data to be input to a model to be learned and a correct answer label to be inferred by the model. While the learning data holding unit 101 accumulates data sets provided from the learning data provision unit 130, it may accumulate data sets obtained from another source. In a case where the model update unit 102 carries out deep learning, a huge amount of data sets is accumulated in the learning data holding unit 101.

As will be described later, in the present embodiment, a custom data set may be generated at the discretion of the user. Thus, the learning data holding unit 101 may associate data sets customized for individual users with, for example, identification information for the individual users, and may retain them separately from general data sets provided from the learning data provision unit 130 or obtained from another source.

The model update unit 102 sequentially reads the training data from the learning data holding unit 101, leans the machine learning model to be learned, and updates the machine learning model. While the machine learning model includes, for example, a neural network, it may be a model using a type such as support vector regression or Gaussian process regression. The machine learning model including the neural network has a multilayer structure including an input layer that receives data (explanatory variable) such as an image, an output layer that outputs a label (objective variable) serving as an inference result for the input data, and one or a plurality of intermediate layers (or hidden layers) between the input layer and the output layer. Each of the layers includes a plurality of nodes corresponding to neurons. Coupling between the nodes across the layers has a weight, and a value of the data input to the input layer is transformed as the data passes from layer to layer. For example, the model update unit 102 calculates a loss function defined on the basis of an error between a label output from the machine learning model for the input data and a known correct answer label corresponding to the input data, and leans the machine learning model while updating model parameters (weight coefficient between nodes, etc.) by backpropagation in such a manner that the loss function is minimized. Note that, since the learning process of the machine learning model is enormous in calculation amount, distributed learning using a plurality of graphics processing units (GPUs) or a plurality of calculation nodes may be carried out.

Then, the model update unit 102 stores the model parameter obtained as a learning result in the model parameter holding unit 103. The model parameter is a variable element that defines the model, and is, for example, a coupling weight coefficient or the like to be given between nodes of a neural network model.

The inference unit 111, the data input unit 112, and the input data processing unit 113 implement the inference phase of the learned model. The data input unit 112 inputs sensor information obtained by a sensor included in the edge device. The input data processing unit 113 performs data processing on data input from the data input unit 112 such that the data has a data format that may be input to the model (e.g., neural network model), and inputs the data to the inference unit 111. The inference unit 111 outputs a label inferred from the input data using the model in which the model parameter read from the model parameter holding unit 103 is set, that is, the learned model.

The learning data evaluation unit 120 evaluates each piece of the training data used to train the machine learning model in the model update unit 102. The learning data evaluation unit 120 includes the physical simulation calculation unit 121 and the evaluation result presentation unit 122.

The physical simulation calculation unit 121 determines a physical characteristic of each piece of the training data on the basis of the inference result of the training data by the model being trained. Specifically, the physical simulation calculation unit 121 determines force that acts on the training data on the basis of the inference result of each piece of the training data by the machine learning model. The force mentioned here includes mass (gravity) and buoyancy of the training data, and attractive force or repulsive force that acts between the training data and other training data. Furthermore, the physical simulation calculation unit 121 may determine not only the acting force but also a physical quantity such as a size (volume) or a shape of the training data. Then, the physical simulation calculation unit 121 carries out physical simulation calculation on the basis of the physical quantity such as the magnitude of the acting force of each piece of the training data determined according to the inference result by the model being trained, and determines the motion of each piece of the training data. A force-directed (FD) method is an example of the physical simulation calculation. Then, the evaluation result presentation unit 122 presents a GUI screen on which a plurality of objects corresponding to individual pieces of the training data is arranged and visually ranked on the basis of the motion information determined on the basis of the physical simulation calculation. On this GUI screen, GUI operation may be performed on the objects corresponding the individual pieces of the training data, such as dragging and dropping. The evaluation result presentation unit 122 may include a display device that displays the GUI screen and an input device (mouse, touch panel, keyboard, etc.) for performing user operation on the GUI screen.

The determination basis calculation unit 123 calculates the basis of the determination of the inference for the training data by the machine learning model being learned in the model update unit 102. For example, the basis of the determination of the inference by the machine learning model is calculated using one or a plurality of XAI algorithms such as Gradient-weighted Class Activation Mapping (Grad-CAM) (e.g., see Non-Patent Document 1), Local Interpretable Model-agnostic Explanations (LIME) (e.g., see Non-Patent Document 2), SHapley Additive exPlanations (SHAP), which is a developed form of LIME, Testing with Concept Activation Vectors (TCAV) (e.g., see Non-Patent Document 3), and the like. Details of a basis calculation method using each of Grad-CAM, LIME/SHAP, and TCAV will be described later. Then, the evaluation result presentation unit 122 may further present the basis of the determination of the inference by the machine learning model for the training data according to the operation (e.g., mouse over or mouse button pressing operation), and the like on the objects corresponding to the individual pieces of the training data on the GUI screen. However, the determination basis calculation for the machine learning model using the XAI algorithms such as Grad-CAM, LIME/SHAP, TCAV, and the like may be performed in the learning system 100 instead of the learning data evaluation unit 120, and the calculation result of the determination basis may be passed from the learning system 100 to the learning data evaluation unit 120.

It is conceivable that the inference result of the training data by the model being trained sequentially changes according to the number of times of training. Therefore, it is assumed that the physical simulation calculation unit 121 determines the physical characteristic of each piece of the training data and performs the physical simulation calculation each time training is performed and the evaluation result presentation unit 122 updates the GUI screen.

C. Training data evaluation

The learning data evaluation unit 120 evaluates the training data used to train the machine learning model in the model update unit 102. In the present embodiment, the learning data evaluation unit 120 includes the physical simulation calculation unit 121 and the evaluation result presentation unit 122. The physical simulation calculation unit 121 determines the physical characteristic of each piece of the training data on the basis of the inference result of the training data by the model being trained, and further calculates motion information of each piece of the training data in a two-dimensional plane or in a three-dimensional space by the physical simulation calculation. Then, the evaluation result presentation unit 122 presents a GUI screen on which objects corresponding to individual pieces of the training data are arranged on the basis of the motion information determined on the basis of the physical simulation calculation. In this section C, a process performed in the learning data evaluation unit 120 will be described in detail.

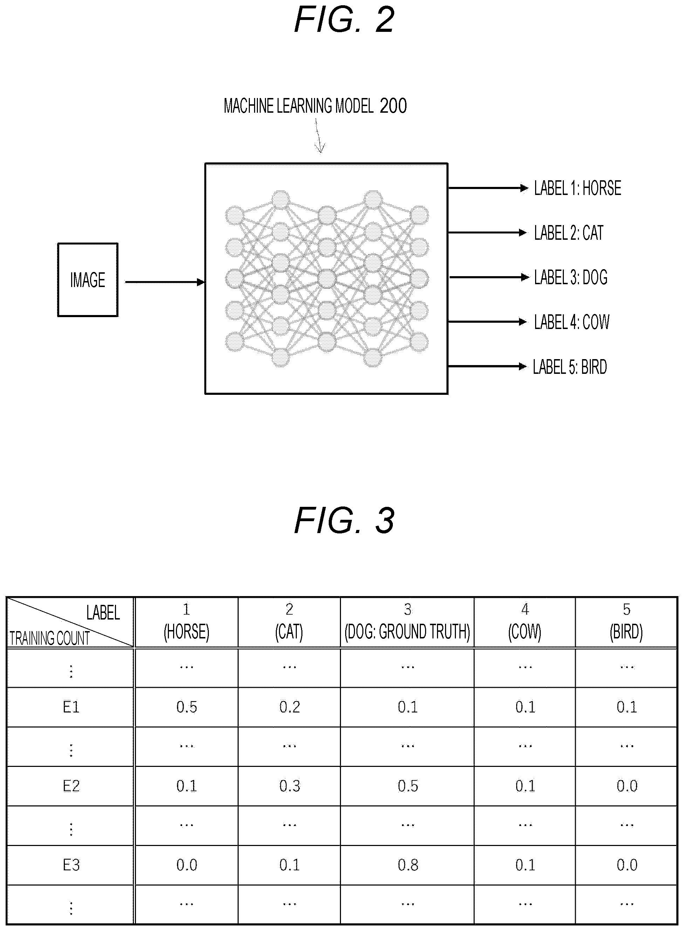

In the following descriptions, it is assumed that the model update unit 102 learns a machine learning model 200 as illustrated in Fig. 2. The machine learning model 200 includes, for example, a neural network, and the machine learning model 200 is trained using the training data read from the learning data holding unit 101. In the example illustrated in Fig. 3, the machine learning model 200 carries out image classification. That is, the input data to the machine learning model 200 is an image, and the machine learning model 200 infers whether the subject included in the image is any of predefined labels 1 to 5, and outputs an expected value (or likelihood) for each label. For example, a label 1 is a horse, a label 2 is a cat, a label 3 is a dog, a label 4 is a cow, and a label 5 is a bird.

Furthermore, in the machine learning model 200, the inference result for the same training data is assumed to transition according to the number of times of training (or number of epochs). For example, while the machine learning model 200 outputs a low expected value for a correct answer label and outputs a high threshold value for an incorrect answer label in a state where the number of times of training is small and the training has not progressed much, the machine learning model 200 gradually transitions to output a higher expected value for the correct answer label according to a progress state of the training.

Fig. 3 exemplifies transition of the inference result according to the number of times of training (number of epochs) for the same training data by the machine learning model 200. In the example illustrated in Fig. 3, the training data is inference results of the machine learning model 200 for input images with the label 3 as the ground truth, and indicates expected values of the individual labels 1 to 5 output from the machine learning model 200 for each number of times of training (however, specific expected values are written only for the training counts E1, E2, and E3, and details of other training counts are omitted to simplify the drawing).

At the training count E1 in which the training has not progressed, the machine learning model 200 outputs a low expected value of "0.1" for the correct answer label 3 while it outputs a higher expected value of "0.5" for the incorrect answer label 1. Thereafter, the training of the machine learning model 200 progresses as the training counts increases to E2, and to E3, and it gradually transitions to output higher expected values of "0.5" and "0.8" for the correct answer label 3 while it transitions to output lower expected values of "0.1" and "0.0" for the incorrect answer label 1 to a dictionary place.

C-1. Physical characteristic determination for training data

The physical simulation calculation unit 121 determines a physical characteristic of each piece of the training data on the basis of the inference result of the training data by the machine learning model trained in the model update unit 102. Since the inference result for the same training data transitions according to the number of times of training, the physical simulation calculation unit 121 determines physical characteristics of individual pieces of the training data on the basis of inference results of the individual pieces of the training data by the machine learning model 200 every time the model parameter is updated using a predetermined number of pieces of the training data (or every epoch), for example.

The physical simulation calculation unit 121 determines the physical characteristic corresponding to the inference result by the machine learning model 200 for the training data. As described with reference to Fig. 3, the inference result of the training data by the machine learning model 200 includes the expected value of each label with respect to the input data. Thus, the physical simulation calculation unit 121 determines, for the training data, physical quantities such as mass (gravity), buoyancy, attractive force or repulsive force that acts between the training data and other training data, a size (volume), and a shape on the basis of the expected value of the correct answer label. Therefore, the evaluation result presentation unit 122 in the subsequent stage is enabled to express each piece of the training data as an object having the physical characteristic determined by the physical simulation calculation unit 121.

Specifically, the physical simulation calculation unit 121 determines a lighter mass and a smaller size for the training data having a lower expected value for the correct answer label, and determines a heavier mass and a larger size for the training data having a higher expected value for the correct answer label. Therefore, it is expected to express the inference result of the training data using the property that a heavy object tends to sink downward and a light object tends to float upward. Furthermore, in a case where the expected value of the correct answer label gradually increases as the number of times of training increases, a light mass is initially determined for the training data, and then sequentially updated to a heavier mass. Note that the buoyancy may be determined depending on the size of the object, or may be determined on the basis of only the expected value for the correct answer label without depending on the size of the object.

Furthermore, the physical simulation calculation unit 121 determines the attractive force and the repulsive force that act between pieces of the training data such that the attractive force acts between pieces of the training data having the same label for which a higher expected value is output from the machine learning model 200 while the repulsive force acts between a learning model in which a lower expected value is output from the machine learning model 200 for the same label and a learning model in which a higher expected value is output in an opposite manner. Therefore, the pieces of the training data having the higher expected value for the same label attract each other by the attractive force. It is expected to express the inference result of the training data using the property that the training data having a higher expected value and the training data having a lower expected value with respect to the same label tend to be separated from each other by the repulsive force. Furthermore, in the case of the training data in which the expected value of the correct answer label gradually increases as the number of times of training increases, the training data first attracts training data having an incorrect answer label, but attracts the training data having the same correct answer label thereafter.

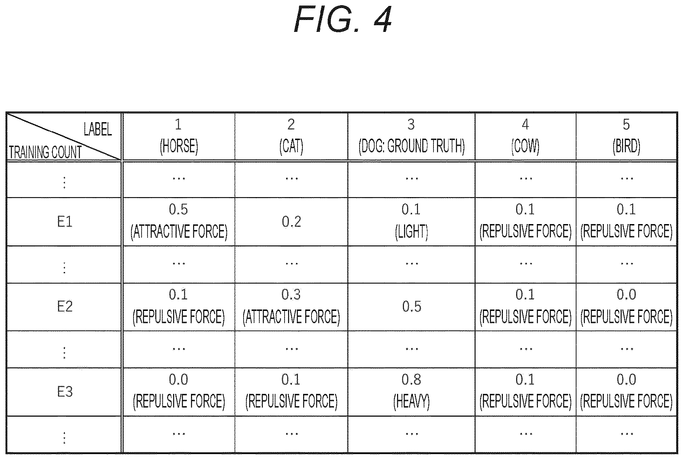

Fig. 4 illustrates the physical characteristics determined by the physical simulation calculation unit 121 written in the exemplary transition of the inference result according to the number of times of training (number of epochs) for certain training data illustrated in Fig. 3.

At the training count E1 in which the training has not progressed, the machine learning model 200 infers the training data to output a low expected value of "0.1" for the correct answer label 3. Therefore, since the expected value output for the correct answer label is low at this time point, the physical simulation calculation unit 121 determines a light mass and a small size for the training data. The physical simulation calculation unit 121 may further determine that large buoyancy acts on the training data. Furthermore, since the machine learning model 200 has output the highest expected value of "0.5" for the incorrect answer label 1, the physical simulation calculation unit 121 determines the attractive force that acts between this piece of training data and another piece of training data having a high expected value for the label 1. Furthermore, since the machine learning model 200 has output the expected value of "0.1", which is lower than the average value, for the labels 3 to 5, the physical simulation calculation unit 121 determines the repulsive force that acts between this piece of training data and another piece of training data having a higher expected value for the labels 3 to 5 in an opposite manner. Meanwhile, since the machine learning model 200 has output the average expected value of "0.2" for the label 2, the physical simulation calculation unit 121 determines that neither the attractive force nor the repulsive force acts between this piece of training data and another piece of training data having a higher expected value for the label 2.

At the training count E2 in which the progress of the training is moderate, the machine learning model 200 infers the training data to output an intermediate expected value of "0.5" for the correct answer label 3. Therefore, since the expected value output for the correct answer label is not high enough at this time point, the physical simulation calculation unit 121 determines an intermediate mass and size for the training data. The physical simulation calculation unit 121 may lower the buoyancy that acts on the training data. Furthermore, since the machine learning model 200 has output the highest expected value of "0.5" for the correct answer label 3, the physical simulation calculation unit 121 determines the attractive force that acts between this piece of training data and another piece of training data having a high expected value for the label 3. Furthermore, since the machine learning model 200 has output the expected value of "0.1" for the incorrect answer labels 1 and 4 and "0.0" for the incorrect answer label 5, which are lower than the average value, the physical simulation calculation unit 121 determines the repulsive force that acts between this piece of training data and another piece of training data having a higher expected value for the individual labels 1, 4, and 5 in an opposite manner. Meanwhile, since the machine learning model 200 has output the expected value of "0.3" higher than the average value for the incorrect answer label 2, the physical simulation calculation unit 121 determines the attractive force that acts between this piece of training data and another piece of training data having a high expected value for the label 2.

At the training count E3 close to the final stage of the training, the machine learning model 200 infers the training data to output the highest expected value of "0.8" for the correct answer label 3. Therefore, since the expected value output for the correct answer label is the highest, the physical simulation calculation unit 121 determines a heavy mass and a large size for the training data. The physical simulation calculation unit 121 may extremely lower the buoyancy that acts on the training data. Furthermore, since the machine learning model 200 has output the highest expected value of "0.8" for the correct answer label 3, the physical simulation calculation unit 121 determines the attractive force that acts between this piece of training data and another piece of training data having a high expected value for the label 3. Furthermore, since the machine learning model 200 has output the expected values of "0.0" and "0.1" for the incorrect answer labels 1 and 5 and 2 and 4, respectively, which are lower than the average value, the physical simulation calculation unit 121 determines the repulsive force that acts between this piece of training data and another piece of training data having a higher expected value for the individual labels 1, 2, 4, and 5 in an opposite manner. Since it has become possible to output a sufficiently high expected value for the correct answer label 3 as a result of the training, a heavy mass is given to the training data. Furthermore, as a result of the training, the repulsive force acts at the training count E3 between the training data and the training data group having high expectations for the label 2 while the attractive force acts at the training count E2.

Then, the physical simulation calculation unit 121 treats each piece of the training data as an object having the determined physical characteristics such as the attractive force, repulsive force, mass, size, and the like, and calculates, by the physical simulation calculation, motion information of the objects corresponding to the individual pieces of the training data in the two-dimensional plane or in the three-dimensional space. The force-directed (FD) method is an example of the physical simulation calculation.

Here, positional information of an object Di corresponding to i-th training data is set to $(x_i, y_i, zi)$, and the mass, size, and buoyancy of the object Di determined by the physical simulation calculation unit 121 on the basis of the inference result (or expected value of the correct answer label) of the machine learning model 200 for the i-th training data are set to $M_i$, $S_i$, and $B_i$, respectively. Furthermore, attractive force or repulsive force $G_{ij}$ expressed by the following equation (1) acts between the object Di corresponding to the i-th training data and an object $D_j$ corresponding to j-th training data (where $i \neq j$).

[Equation 1]

$$G_{ij} = \delta_{ij} \cdot k \cdot \frac{M_i M_j}{r_{ij}^2} \qquad \cdots (1)$$

However, in the above equation (1), k represents a constant (e.g., universal gravitational constant), and $r_{ij}$ represents a distance between the object $D_i$ corresponding to the i-th training data and the object $D_j$ corresponding to the j-th training data. Furthermore, $\delta_{ij}$ takes a value of 1, 0, or -1 on the basis of matching between the label for which the highest expected value has been inferred for the j-th training data and the respective labels for which the highest expected value and the lowest expected value have been inferred for the i-th training data by the machine learning model 200. $\delta_{ij} = 1$ indicates that, in a case where the label having the highest expected value matches between the i-th training data and the j-th training data, the attractive force acts between the object $D_i$ and the object $D_j$ corresponding to the respective pieces of training data. Furthermore, $\delta_{ij} = -1$ indicates that, in a case where the label having the highest expected value in one of the i-th training data and the j-th training data matches the label having the lowest expected value in the other, the repulsive force acts between the object $D_i$ and the object $D_j$ corresponding to the respective pieces of training data. Furthermore, $\delta_{ij} = 0$ indicates that there is no correlation in the expected value of the label between the i-th training data and the j-th training data, and thus no force acts between the object $D_i$ and the object $D_j$ corresponding to the respective pieces of training data.

Therefore, force $F_i$ that acts on the object $D_i$ corresponding to the i-th training data is expressed as a resultant force of the sum of the force (attractive force or repulsive force) $G_{ij}$ that acts between the object Di and the object $D_j$ corresponding to each of other pieces of training data, gravity $M_ig$ corresponding to the mass Mi of the object Di, and the buoyancy Bi of the object Di, as in the following equation (2).

[Equation 2]

$$F_i = \sum_j G_{ij} + M_i g + B_i \qquad \cdots (2)$$

The physical simulation calculation unit 121 sets a mechanical model in which the force as expressed in the above equation (2) acts on the objects corresponding to individual pieces of the training data used to train the machine learning model 200. Then, the physical simulation calculation unit 121 calculates two-dimensional or three-dimensional motion information of each object by physical simulation calculation.

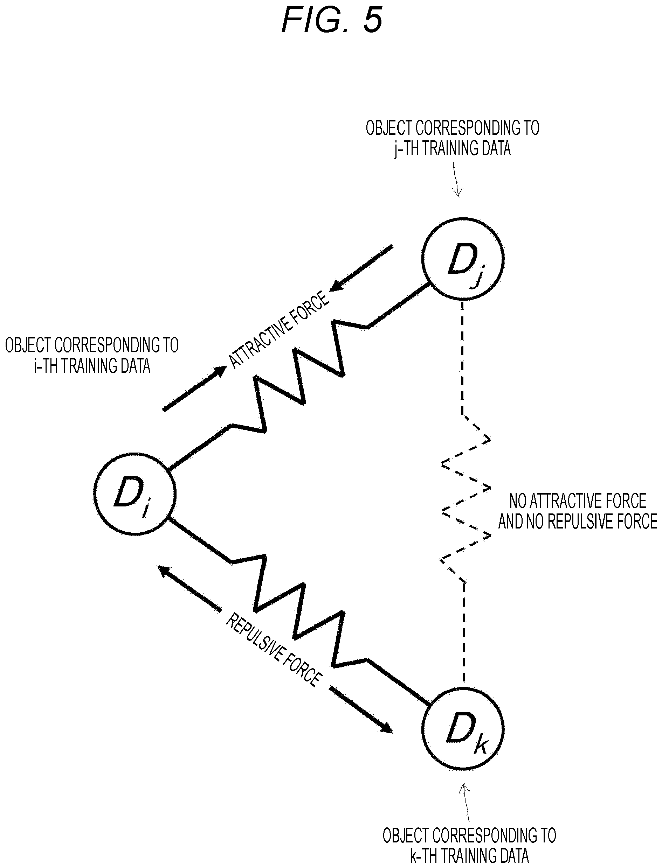

Fig. 5 exemplifies a mechanical model including three objects Di, $D_j$, and $D_k$ corresponding to respective pieces of the training data. In the example illustrated in Fig. 5, it is assumed that the attractive force acts between the object $D_i$ and the object $D_j$ and the repulsive force acts between the object $D_i$ and the object $D_k$ while neither the attractive force nor the repulsive force acts between the object D and the object $D_k$. Furthermore, the gravity and the buoyancy of each of the objects $D_i$, $D_j$, and $D_k$ are omitted for explanatory convenience. Fig. 5 illustrates the mechanical model including the objects Di, $D_j$, and $D_k$ as a spring system in which the objects are coupled by springs. Restoring force acts on each of the springs coupling the objects in either the compression direction or the extension direction. For example, in a case where the physical simulation calculation is carried out using the force-directed method, the positions of the objects corresponding to the respective pieces of training data may be calculated such that the potential energy is minimized in such a spring system. It is needless to say that, even if the gravity and the buoyancy act on the respective objects in this spring system, the positions of the respective objects may be calculated such that the potential energy is minimized by performing the physical simulation calculation such as the force-directed method.

C-2. Presentation of evaluation result for training data

The evaluation result presentation unit 122 presents the evaluation result when each piece of the training data is used to train the machine learning model 200 on the basis of the physical characteristic of each piece of the training data determined by the physical simulation calculation unit 121 on the basis of the inference result by the machine learning model 200. As explained in the section C-1 described above, the physical simulation calculation unit 121 determines the physical characteristics of the training data according to the inference result by the machine learning model 200, and calculates, by the physical simulation calculation, the motion information of the objects corresponding to individual pieces of the training data in the two-dimensional plane or in the three-dimensional space by regarding the individual pieces of the training data as objects having the determined physical characteristics. Then, the evaluation result presentation unit 122 presents a GUI screen on which objects corresponding to individual pieces of the training data are arranged on the basis of the motion information determined on the basis of the physical simulation calculation. On this GUI screen, the object for each piece of the training data is displayed as an object having a size determined according to the inference result by the machine learning model 200, and is moved according to the motion information calculated by the physical simulation calculation.

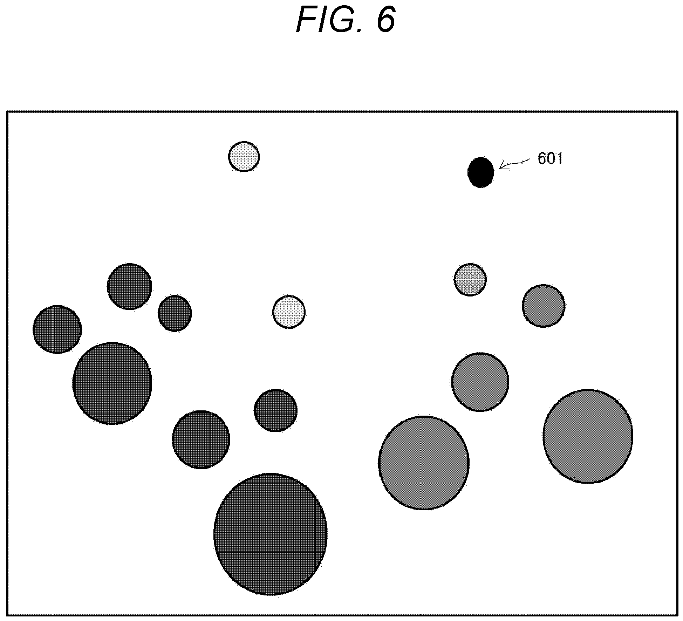

Fig. 6 illustrates exemplary display of the GUI screen on which the evaluation result presentation unit 122 maps the objects corresponding to individual pieces of the training data on the basis of the result of the physical simulation calculation in the physical simulation calculation unit 121. While all the objects corresponding to the individual pieces of the training data are illustrated as circles or spheres in the example illustrated in Fig. 6 to simplify the drawing, the objects may have other shapes, such as quadrangular blocks, cubes, or the like. It is needless to say that each piece of the training data may be represented by an object having a different shape. Furthermore, the objects may be color-coded and displayed according to the correct answer label of the training data.

Since the object corresponding to the training data having a higher expected value for the correct answer label is heavier, it tends to sink downward on the GUI screen illustrated in Fig. 6. Furthermore, since strong attractive force acts between objects of pieces of the training data having the same label with a high expected value so that the objects attract each other, the objects are mapped closer on the GUI screen. Meanwhile, since the object corresponding to the training data having a lower expected value for the correct answer label is lighter, the object tends to float upward on the GUI screen. Furthermore, since the attractive force that acts on the light object is small, it may be mapped to a position separated from another object without being attracted to an object corresponding to another piece of the training data having the same label with a high expected value. Therefore, the evaluation result presentation unit 122 may be regarded as a GUI screen that visually ranks and displays the evaluation results of the individual pieces of the training data used for the training.

In Fig. 6, for example, an object indicated by a reference numeral 601 corresponds to a learning model that outputs a low expected value for the correct answer label, which is light and has a small size, and is mapped to a position separated from other objects. In the inference result of the machine learning model 200 for the training data corresponding to the object 601, the expected value for the correct answer label is low.

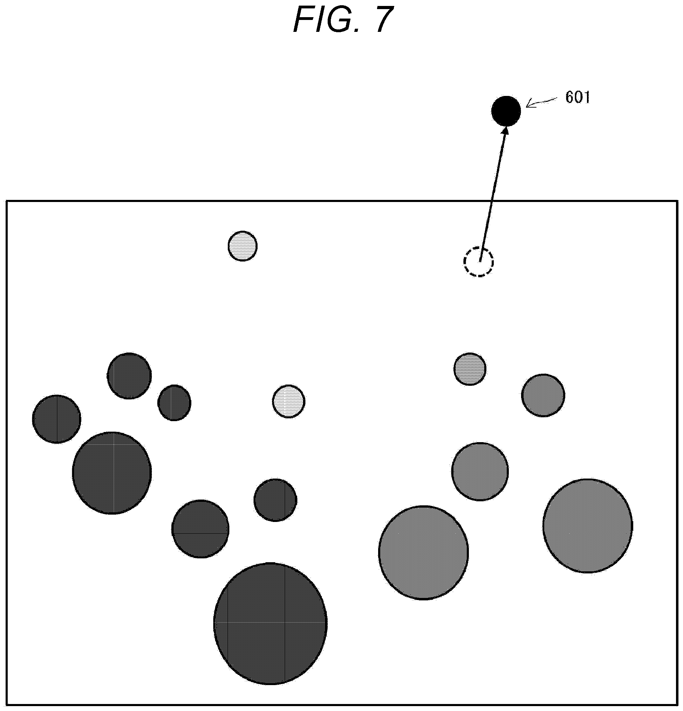

The user (e.g., developer of the machine learning model 200) is enabled to grasp the object 601 corresponding to the training data having a problem on the GUI screen on which the evaluation results of the individual pieces of the training data are visually ranked and displayed as illustrated in Fig. 6. Furthermore, the user may delete the corresponding training data from the learning data holding unit 101 by performing a GUI operation of moving the object 601 to the outside of the predetermined area as illustrated in Fig. 7, for example. Note that sound effects may be output according to the GUI operation of moving the object 601 within the GUI screen or excluding the object 601 from the area.

The user is enabled to reduce the time loss caused by re-training by not using the training data deleted according to the GUI operation for training of the machine learning model 200 thereafter. Furthermore, it becomes possible to generate a custom data set at the discretion of the user by excluding one or more pieces of the training data deleted according to the GUI operation of moving an object to the outside of the area. Furthermore, the learning data holding unit 101 may associate data sets customized for individual users with, for example, identification information for the individual users, and may retain them separately from general data sets provided from the learning data provision unit 130 or obtained from another source.

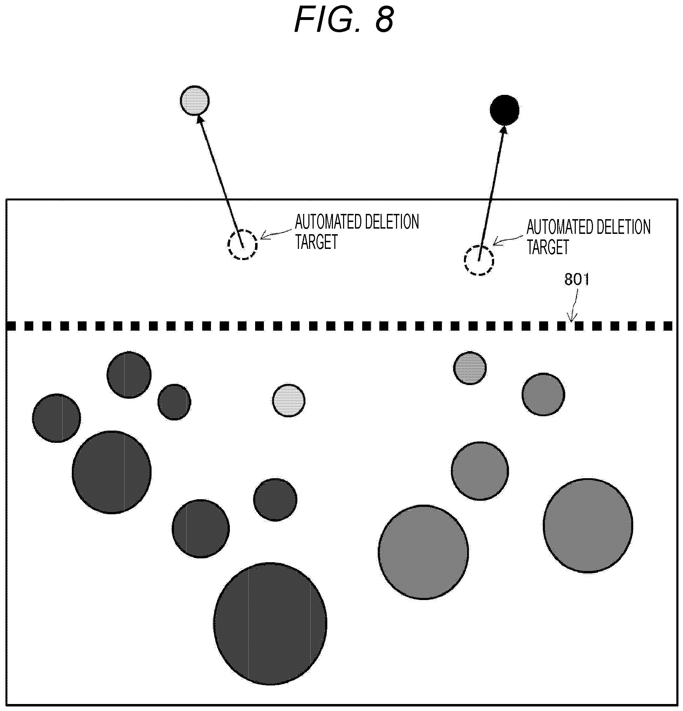

Fig. 8 illustrates another example of the GUI operation in which the user deletes the training data on the GUI screen illustrated in Fig. 6. As described above, the physical simulation calculation unit 121 determines a lighter mass and a smaller size for an object corresponding to the training data having a lower expected value for the correct answer label, and thus, when the physical simulation calculation is carried out, the attractive force between the object and another object is small or the object floats to the upper side of the GUI screen due to the buoyancy. For example, when the user sets a lower limit threshold value allowed as the expected value of the correct answer label or a threshold value for adjusting the allowable object mass on the basis of his/her own request, a threshold line indicating the threshold value set by the user is displayed as indicated by a reference numeral 801 in Fig. 8. Alternatively, the user may directly specify the position of the threshold line 801 by performing a drag operation or the like on the GUI screen. An object floating on the upper side of the GUI screen beyond the threshold line 801 is an object corresponding to training data having a problem to be used to train the machine learning model 200, and is subject to automated deletion. Note that, instead of the user adjusting the position of the threshold line on the basis of his/her own request, the position of the threshold line 801 may be determined on the basis of a threshold value preset in the system, and training data corresponding to an object exceeding the threshold line 801 may be subject to the automated deletion. Furthermore, by setting the threshold line 801, it becomes possible to generate a custom data set at the discretion of the user by excluding one or more pieces of the training data at a position exceeding the threshold line 801.

As described with reference to Figs. 7 and 8, the training data having a problem to be used to train the machine learning model 200 may be deleted automatically or according to a request of the user. Furthermore, the user is enabled to visually check the training data to be deleted through the GUI screen. Then, the model update unit 102 is enabled to exclude the training data for which the deletion operation is performed on the GUI screen, and proceed with the training of the machine learning model.

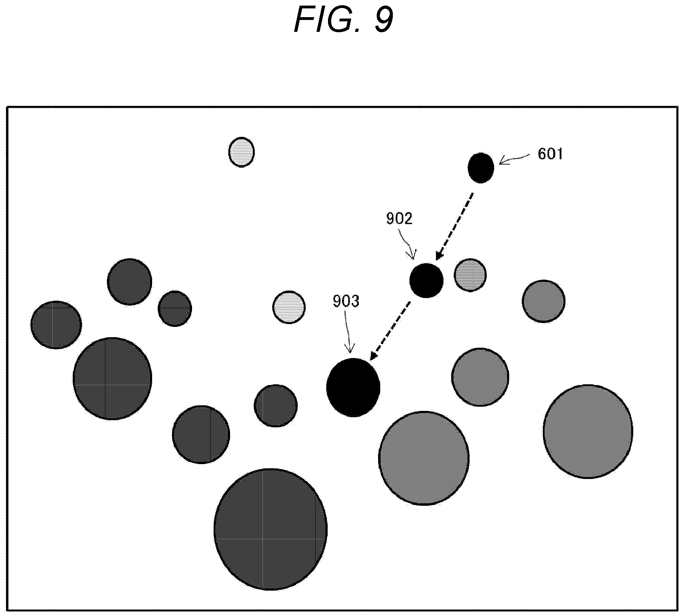

Here, referring to Fig. 4, even if the expected value for the correct answer label is low at the initial stage of the training (at the training count E1), the expected value for the correct answer label may increase as the training advances to the count E2, count E3, and so on. Since the object corresponding to the training data having a higher expected value for the correct answer label is heavier and has a larger size, it tends to sink downward on the GUI screen illustrated in Fig. 6. Furthermore, since strong attractive force acts between objects of pieces of the training data having the same label with a high expected value so that the objects attract each other, the objects are mapped closer on the GUI screen. For example, as illustrated in Fig. 9, while a certain piece of the training data is represented by the object indicated by the reference numeral 601 as the expected value of the correct answer label is low after the training of the count E1, it is assumed that the expected value of the correct answer label gradually increases after the training of the count E2 and the count E3 so that it transitions to a larger and heavier object indicated by a reference numeral 902, and to a further larger and heavier object indicated by a reference numeral 903.

Therefore, the evaluation result presentation unit 122 is enabled to visually rank and display evaluation results of individual pieces of the training data dynamically changing during the training of the machine learning model 200 through the GUI screen as illustrated in Fig. 9. When the GUI screen is updated by determining the physical characteristics and performing the physical simulation calculation each time the machine learning model 200 being trained in the model update unit 102 infers the training data, the object corresponding to the training data appears to the user to be autonomously moving. The user (e.g., developer of the machine learning model 200) is enabled to appropriately select each piece of the training data while observing a change in the evaluation result of each piece of the training data for each number of times of training through the GUI screen as illustrated in Fig. 9. For example, in the GUI screen illustrated in Fig. 9, it may be confirmed that the training data corresponding to the object 601 has an expected value of the correct answer label that increases as the number of times of training increases, and the mass of the corresponding object increases accordingly to gradually move downward in the GUI screen, so that no problem is raised to use the training data for the training of the machine learning model 200. The user is enabled to grasp that the training data corresponding to the object 903 does not need to be deleted or should be used to train the machine learning model 200. Note that sound effects may be output according to the operation in which the object corresponding to the training data gradually moves as the training of the machine learning model 200 progresses.

Note that, in a case where the force that acts on the object obtained by the physical simulation calculation is not in the equilibrium state, there is a possibility that a plurality of objects is densely agglutinated or displayed around the edge of the screen. In that case, a distance may be taken between objects or a distance may be taken between an object and the screen edge so that the user is enabled to appropriately recognize the object corresponding to the training data. Furthermore, in a case where the object has entered a state of showing a periodic motion, an average position based on the periodic motion may be calculated and displayed on the GUI screen. Furthermore, a command for temporarily stopping the motion of the object on the GUI screen may be input, and an icon or the like corresponding to such a command may be displayed on the GUI screen.

C-3. Presentation of determination basis of inference by machine learning model

There is a problem that a process through which the artificial intelligence reaches an inference result is made into a black box and the basis of the determination is difficult to understand. In view of the above, in the present embodiment, the determination basis calculation unit 123 calculates the basis of the determination of the inference for the training data by the machine learning model 200, and the evaluation result presentation unit 122 further presents the basis of the determination of the inference for the training data by the machine learning model.

The determination basis calculation unit 123 calculates the basis of the determination of the inference by the machine learning model 200 using, for example, various explainable AI (XAI) algorithms such as Grad-CAM, LIME, SHAP, which is a developed form of LIME, TCAV, and the like. The determination basis calculation unit 123 calculates the basis of the determination using one or a plurality of XAI algorithms for the inference label for which the machine learning model 200 has output the highest expected value. It is needless to say that the determination basis calculation unit 123 may further calculate the determination basis for labels having second and higher expected values.

Here, the Grad-CAM is an algorithm that estimates a place contributing to class classification in the input image data by a method of reversely tracing (calculating contribution of each feature map up to class classification, and performing back propagation using weight thereof) a gradient from a label that is an inference result of class classification in the output layer, and is capable of visualizing the place contributing to class classification like a heat map. Alternatively, by holding the positional information of the pixels of the input image data up to the final convolution layer and obtaining a degree of influence of the positional information on the final determination output, a part having a strong influence in the original input image may be displayed by heat map display. A method of calculating the determination basis on the basis of the Grad-CAM algorithm (method of generating a heat map) in a case where image recognition is performed on the input image to output a class c in the machine learning model including the neural network will be described.

About Grad-CAM:

Assuming that a gradient $y_c$ of the class c is activation $A_k$ of the feature map, a weight of the importance of the neuron is given as expressed by the following equation (3).
[Equation 3]

$$\alpha_k^c = \frac{1}{Z}\sum_i \sum_j \frac{\partial y^c}{\partial A_{ij}^k} \qquad \cdots (3)$$

Then, the forward propagation output of the final convolution layer is multiplied by the weight for each channel, and Grad-CAM is calculated via an activation function ReLU as expressed by the following equation (4).
[Equation 4]

$$L_{Grad-CAM}^c = ReLU(\sum_k \alpha_k^c A^k) \qquad \cdots (4)$$

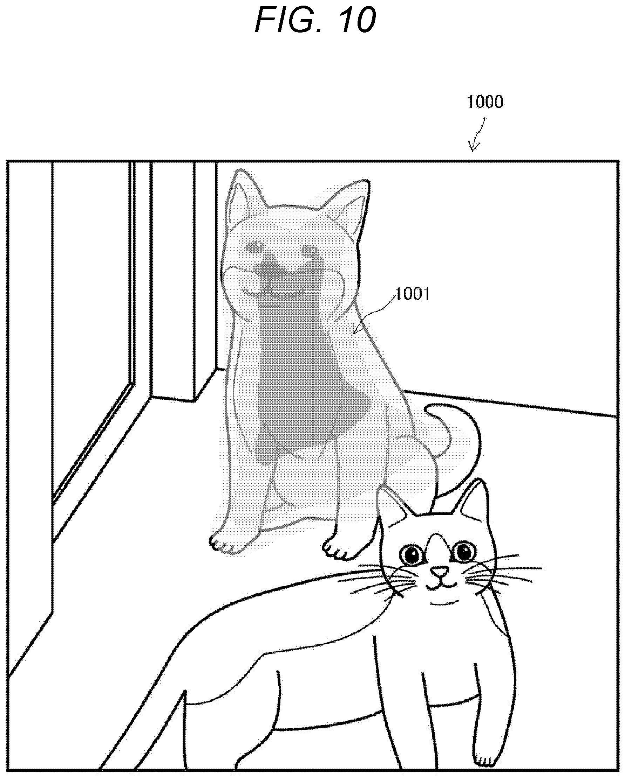

Fig. 10 illustrates an exemplary determination basis image with heat map display calculated by the determination basis calculation unit 123 on the basis of the Grad-CAM algorithm. In the example illustrated in Fig. 10, in input image data 1000, a heat map 1001 is superimposed on a part serving as the basis of the inference label for which the machine learning model 200 has output the highest expected value. The original input image is an image in which a dog and a cat are shown together, and is used to train the machine learning model 200 as training data with a correct answer label "dog (label 3)". By referring to the image data with heat map display as illustrated in Fig. 10, the user is enabled to grasp whether there is a problem in using the original input image as the training data on the basis of whether the area where the heat map is displayed represents the correct answer label. Since the "dog", which is the correct answer label, is correctly subject to the heat map display in the example illustrated in Fig. 10, the user is enabled to determine that there is no problem in using this input image as the training data.

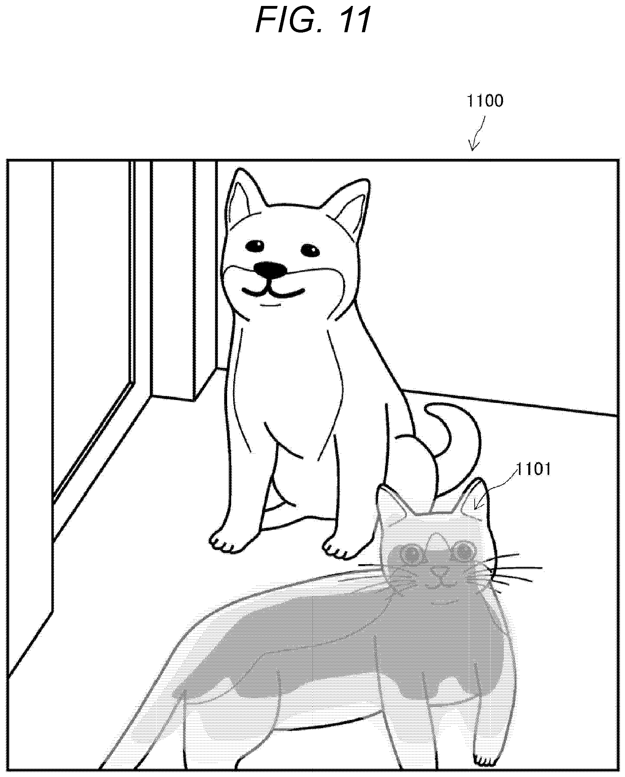

Meanwhile, Fig. 11 illustrates another exemplary determination basis image with heat map display calculated by the determination basis calculation unit 123 on the basis of the Grad-CAM algorithm for the same input image 1100 as in Fig. 10. In the example illustrated in Fig. 11, while the inference label for which the machine learning model 200 has output the highest expected value is "dog", a heat map 1101 is displayed in a region of the cat, not the dog, in the input image 1100. By referring to the image data in which the heat map is displayed in a region different from the inference label as illustrated in Fig. 11, the user is enabled to grasp that there is a problem in using the original input image as the training data.

About LIME:

If the output result of the neural network is inverted or greatly changed when a specific input data item (feature amount) is changed, LIME estimates the item as having a "high degree of importance in determination". For example, the determination basis calculation unit 123 generates another model (basis model) that is locally approximated to present the reason (basis) of the inference by the machine learning model being trained by the model update unit 102.

The determination basis calculation unit 123 generates a locally approximated basis model for a combination of the input image and the output result corresponding to the input information. Then, the determination basis calculation unit 123 is enabled to generate, using the basis model, basis information regarding the inference label for which the machine learning model being trained has output the highest expected value, and to generate the basis image as illustrated in Fig. 10 in a similar manner to the Grad-CAM algorithm.

About TCAV:

The TCAV is an algorithm that calculates the importance of a concept (concept that may be easily understood by humans) for prediction of a trained model. For example, the determination basis calculation unit 123 generates a plurality of pieces of input information obtained by duplicating or changing the input information (pathological image data), inputs each of the plurality of pieces of input information to a model (explanation target model) as a generation target of the basis information, and causes a plurality of pieces of output information corresponding to the individual pieces of the input information to be output from the explanation target model. Then, the determination basis calculation unit 123 learns a basis model using a combination (pair) of each of the plurality of pieces of input information and each of the plurality of pieces of corresponding output information as training data, and generates a basis model that is locally approximated with another interpretable model for the target input information. Then, when a label is output from the machine learning model being trained by the model update unit 102, the determination basis calculation unit 123 can generate basis information regarding the output label using the basis model to generate a basis image as illustrated in Fig. 10 in a similar manner.

It is needless to say that the determination basis calculation unit 123 may calculate the basis regarding the output label of the machine learning model being trained by the model update unit 102 on the basis of an algorithm other than Grad-CAM, LIME/SHAP, TCAV, and the like described above.

C-4. Detailed information presentation method

As already described with reference to Fig. 6, the evaluation result presentation unit 122 presents, to the user, the GUI screen on which objects representing individual pieces of the training data are mapped on the basis of the physical characteristic determined by the physical simulation calculation unit 121 for each piece of the training data and the result of the physical simulation calculation based on the determined physical characteristic. Such a GUI screen visually ranks and displays the evaluation results for the individual pieces of training data, and the user is enabled to intuitively grasp presence or absence of a problem with the training data through the GUI screen. However, at a time of determining whether or not to exclude the training data, there is a demand that the user wants to check more detailed information regarding the training data even if the training data is visually ranked low.

Meanwhile, the training data includes detailed information such as an image (image file name) and a correct answer label, and also an inference result (expected value for each label) by the machine learning model being trained. Furthermore, the determination basis calculation unit 123 calculates the basis of the determination using one or a plurality of XAI algorithms for the inference label for which the machine learning model 200 has output the highest expected value. In addition, each piece of the training data may be evaluated by further using a method other than the above-described method of evaluating the physical characteristic determined on the basis of the inference result by the machine learning model.

In view of the above, according to a request of the user, detailed information of the training data, an evaluation result by the XAI algorithm, an evaluation result by a different method, and the like are displayed on the GUI screen that displays the evaluation results of individual pieces of the training data as illustrated in Fig. 6.

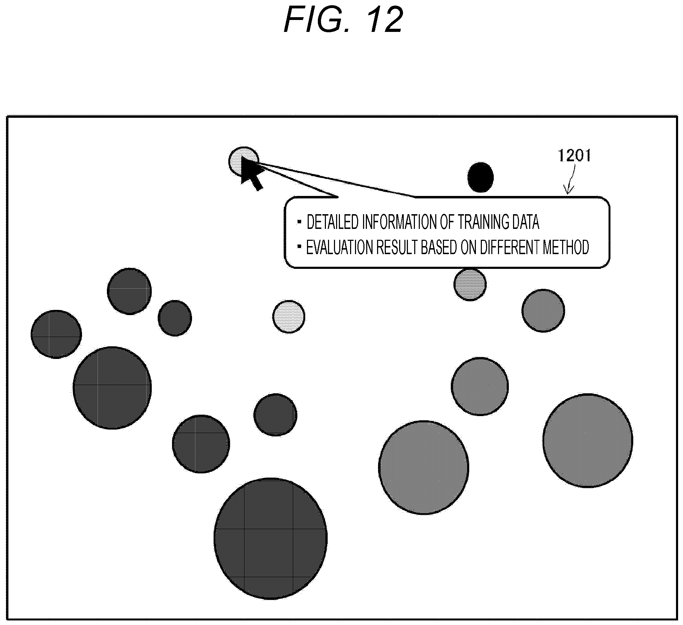

Fig. 12 illustrates an example of the GUI operation for displaying detailed information of the training data. In the example illustrated in Fig. 12, the user performs, for example, a mouse over operation, a mouse button pressing operation, a touch operation, or the like on the object of interest on the GUI screen that displays evaluation results of individual pieces of the training data. In response to the mouse operation, a balloon 1201 in which detailed information of the image data corresponding to the object to be operated is described is popped up.

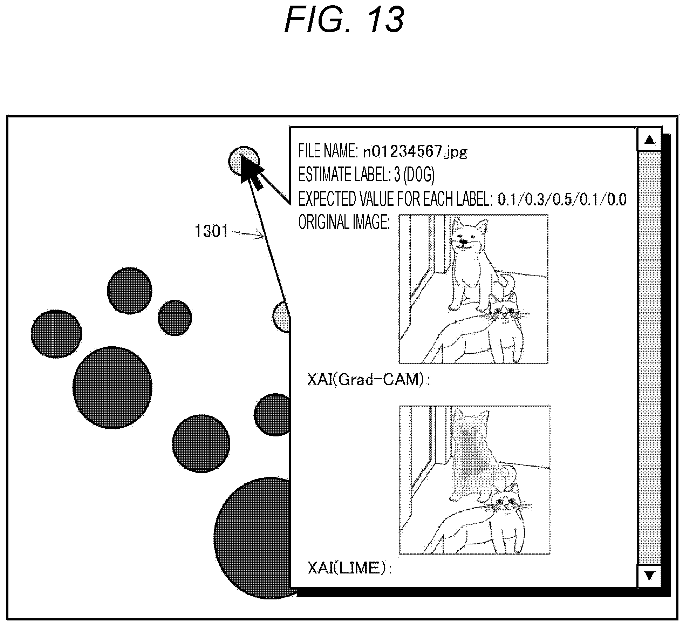

Furthermore, Fig. 13 more specifically illustrates detailed information of the training data displayed in response to a mouse operation performed on an object on the GUI screen. In a balloon 1301 illustrated in Fig. 13, a file name of an image to be input data, a correct answer label corresponding to the input data, an inference result (expected value for each label) by the machine learning model being trained, an input image, and a determination basis calculated using one or more XAI algorithms for the inference label for which the highest expected value has been output are displayed. In a case where all the pieces of data cannot be simultaneously displayed in the balloon 1301, a slider bar 1302 may be provided at the right end edge of the balloon 1301, for example, so that the display range may be moved.

C-5. Processing procedure

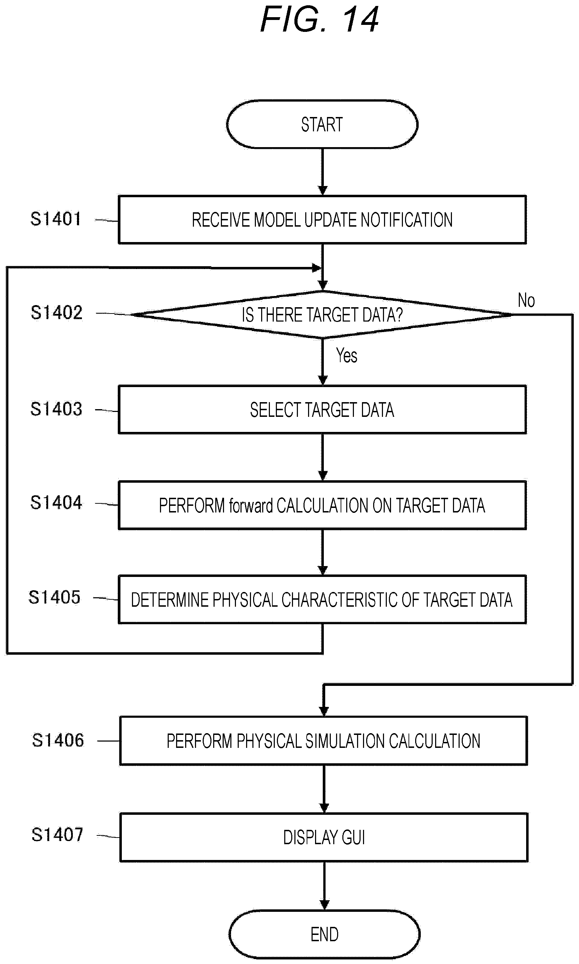

Fig. 14 illustrates a processing procedure to be performed by the learning data evaluation unit 120 in a form of a flowchart. In the processing procedure illustrated in Fig. 14, it is assumed that physical characteristic determination and physical simulation calculation are carried out each time the machine learning model 200 being trained in the model update unit 102 infers the training data to update the GUI screen (see Figs. 6 to 9).

In the learning system 100, each time the model update unit 102 updates model parameters using the training data, the learning data evaluation unit 120 is notified that the machine learning model has been updated. When the learning system 100 notifies the learning data evaluation unit 120 of the update of the machine learning model (step S1401), it starts subsequent processing of evaluating the training data.

The learning data evaluation unit 120 basically sets all the pieces of training data used to train the machine learning model in the model update unit 102 as evaluation targets. It is needless to say that some of the pieces of training data used to train the machine learning model may be set as the evaluation targets, or some of the used pieces of training data may be excluded from the evaluation targets.

In a case where unevaluated pieces of the training data still remain (Yes in step S1402), the learning data evaluation unit 120 selects one of them as target data (step S1403), and calculates inference of the target data (S1404). In step S1404, forward simulation of the target data may be calculated using the machine learning model being trained, or an inference result of the machine learning model being trained may be obtained from the model update unit 102.

As already described with reference to Fig. 3, the inference result of the machine learning model includes the expected value of each output label of the machine learning model with respect to the target data. Subsequently, the physical simulation calculation unit 121 determines physical characteristics such as mass and a size of the target data and acting force (attractive force or repulsive force) between the target data and other training data on the basis of the inference result of the machine learning model with respect to the target data (step S1405).

Next, when the physical characteristics are determined for all pieces of the target data, (No in step S1402), the physical simulation calculation unit 121 performs the physical simulation calculation on the objects corresponding to individual pieces of the target data (step S1406). For example, the physical simulation calculation is carried out using the force-directed method, and motions of the objects corresponding to the individual pieces of the target data that minimize the potential energy are calculated.

Then, the evaluation result presentation unit 122 presents a GUI screen on which the plurality of objects corresponding to the individual pieces of the target data is arranged and visually ranked on the basis of the motion information determined in step S1406 on the basis of the physical simulation calculation (step S1407). When the GUI screen is updated by determining the physical characteristics and performing the physical simulation calculation each time the machine learning model 200 being trained in the model update unit 102 infers the training data, the object corresponding to the training data appears to the user to be autonomously moving (e.g., see Fig. 9).

D. System configuration

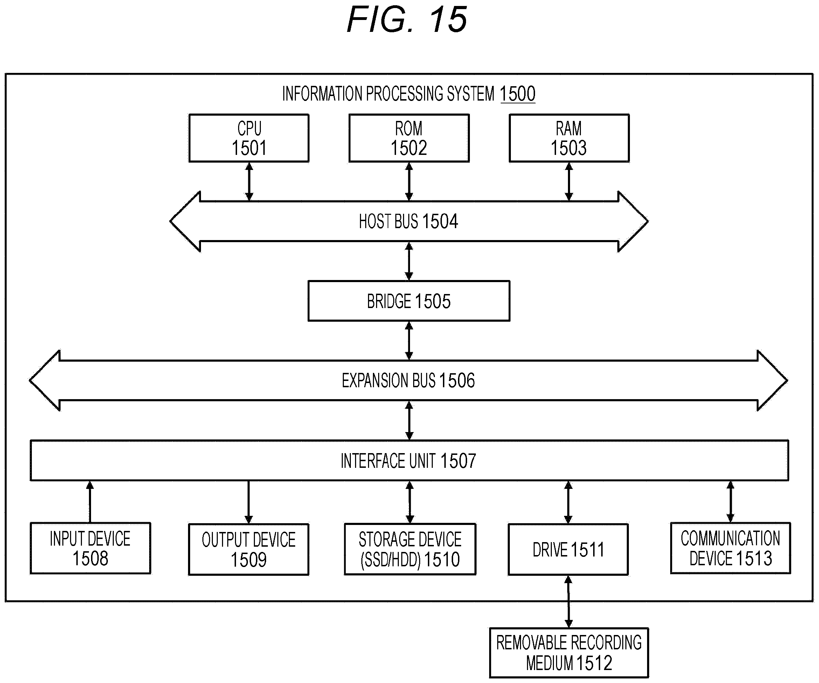

Fig. 15 illustrates a hardware configuration example of an information processing system 1500 that operates as the learning data evaluation unit 120. The information processing system 1500 includes, for example, a personal computer, and functionally, the learning data evaluation unit 120 includes functional modules such as the physical simulation calculation unit 121, the evaluation result presentation unit 122, the determination basis calculation unit 123, and the like. The information processing system 1500 may be the same system as the learning system 100, or may be a system independent from the learning system 100.

The illustrated information processing system 1500 includes a central processing unit (CPU) 1501, a read only memory (ROM) 1502, a random access memory (RAM) 1503, a host bus 1504, a bridge 1505, an expansion bus 1506, an interface unit 1507, an input device 1508, an output device 1509, a storage device 1510, a drive 1511, and a communication device 1513.

The CPU 1501 functions as an arithmetic processing device and a control device, and controls overall operation of the information processing system 1500 according to various programs. Furthermore, the information processing system 1500 may further include, as an arithmetic processing device, a GPU or general-purpose computing on graphics processing units (GPGPU) in addition to the CPU 1501.

The ROM 1502 stores programs (basic input-output system, etc.), operation parameters, and the like to be used by the CPU 1501 in a nonvolatile manner. The RAM 1503 is used to load a program to be used in execution of the CPU 1501 and temporarily store parameters such as work data that appropriately change during program execution. Examples of the program loaded into the RAM 1503 and executed by the CPU 1501 include various application programs and an operating system (OS).

The CPU 1501, the ROM 1502, and the RAM 1503 are interconnected using the host bus 1504 including a CPU bus or the like. Then, the CPU 1501 operates in conjunction with the ROM 1502 and the RAM 1503 to execute various application programs under the execution environment provided by the OS, thereby enabling various functions and services to be implemented. In the present embodiment, the function as the learning data evaluation unit 120 is implemented by cooperative operation of the CPU 1501, the ROM 1502, and the RAM 1503, and the physical characteristic determination and the physical simulation calculation of the training data used to train the machine learning model, the GUI screen presentation of the evaluation result of the training data based on the physical simulation calculation, the inference basis calculation of the training data by the machine learning model, and the like are implemented.

The host bus 1504 is coupled to the expansion bus 1506 via the bridge 1505. The expansion bus 1506 is, for example, peripheral component interconnect (PCI) or PCI Express (PCIe) formulated by peripheral component interconnect special interest group (PCI-SIG). However, the information processing system 1500 is not necessarily required to have a configuration in which circuit components are separated by the host bus 1504, the bridge 1505, and the expansion bus 1506, and thus may be configured such that almost all circuit components are implemented by being interconnected using a single bus (not illustrated).

The interface 1507 couples external devices or peripheral devices such as the input device 1508, the output device 1509, the storage device 1510, the drive 1511, and the communication device 1513 in accordance with the standard of the expansion bus 1506. However, in order for the information processing system 1500 to operate as the learning data evaluation unit 120, not all the external devices or the peripheral devices illustrated in Fig. 15 are essential, and the information processing system 1500 may further include an external device or a peripheral device not illustrated in the drawing.

The input device 1508 includes an input control circuit that generates input signals on the basis of an input from the user and outputs them to the CPU 1501, and the like. The input device 1508 is at least one of a mouse, a keyboard, a touch panel, a button, a microphone, a switch, or a lever, for example. For example, the input device 1508 is used by the user (developer of the machine learning model) to operate an object corresponding to training data on the GUI screen (see Fig. 7) or to input another instruction.

The output device 1509 includes, for example, a display device such as a liquid crystal display (LCD) device, an organic electro-luminescence (EL) display device, a light emitting diode (LED), or the like, and displays various types of data such as video data as an image or text. Furthermore, the output device 1509 includes a voice output device such as a speaker, a headphone, and the like, and converts audio data or the like into voice and outputs the voice.

The storage device 1510 includes, for example, a mass storage device such as a solid state drive (SSD) or a hard disk drive (HDD). The storage device 1510 stores files such as programs to be executed by the CPU 1501, various types of data, and the like.

A removable storage medium 1512 is a cartridge-type storage medium such as a magnetic disk, an optical disk, a magneto-optical disk, a semiconductor memory, or the like. The drive 1511 performs read and write operations on the removable storage medium 1513 loaded therein. The drive 1511 outputs data read from the removable recording medium 1512 to the RAM 1503, and writes data in the RAM 1503 to the removable recording medium 1512. The drive 1511 may be incorporated in a housing of the information processing system 1500, or may be externally attached.

The communication device 1513 is a device for connecting to an external network such as a local area network (LAN) or the Internet, and includes, for example, a network interface card (NIC).

INDUSTRIAL APPLICABILITY

The present disclosure has been described in detail with reference to the specific embodiment. However, it is obvious that those skilled in the art may make modifications and substitutions of the embodiment without departing from the gist of the present disclosure.

While the embodiment of applying the present disclosure to a learning system that learns a machine learning model that mainly performs image classification has been mainly described herein, the gist of the present disclosure is not limited thereto. For example, the training data evaluation according to the present disclosure may be carried out for a machine learning model that performs various types of inference such as voice recognition, character recognition, data generation, and the like. Furthermore, the machine learning model includes a neural network, or may be a model using a type such as support vector regression or Gaussian process regression.

In short, the present disclosure has been described in an illustrative manner, and the contents described herein should not be interpreted in a limited manner. In order to determine the gist of the present disclosure, the claims should be taken into consideration.

Note that the present disclosure may also have the following configurations.

(1) An information processing method that performs processing related to training data to be used to train a machine learning model, the method including:

a determination step of determining a characteristic of each piece of the training data on the basis of an inference result of the machine learning model for the training data; and

a presentation step of presenting an evaluation result of the training data based on the determined characteristic.

(2) The information processing method according to (1) described above, in which

in the determination step, a physical characteristic of an object corresponding to each piece of the training data is determined on the basis of the inference result of the machine learning model, and physical simulation calculation between objects each having the determined physical characteristic is performed, and

in the presentation step, the object corresponding each piece of the training data is presented on the basis of a result of the physical simulation calculation.

(3) The information processing method according to (2) described above, in which
in the determination step, the physical characteristic of the object corresponding to the training data is determined on the basis of an expected value for each label output by the machine learning model for the training data.
(4) The information processing method according to (3) described above, in which
in the determination step, mass, buoyancy, or a size of the object corresponding to the training data is determined on the basis of the expected value for a correct answer label.
(4-1) The information processing method according to (4) described above, in which
in the determination step, the physical characteristic of each piece of the training data is determined such that the object corresponding to the training data having a larger expected value for the correct answer label becomes heavier or larger and the object corresponding to the training data having a smaller expected value for the correct answer label becomes lighter or smaller.
(5) The information processing method according to (3) or (4) described above, in which
in the determination step, at least one of attractive force or repulsive force that acts between the objects corresponding to each piece of the training data is determined on the basis of the expected value for a correct answer label.
(5-1) The information processing method according to (5) described above, in which
in the determination step, the attractive force that acts between the objects corresponding to pieces of the training data having the same label for which the expected value is high is determined.
(5-2) The information processing method according to (5) or (5-1) described above, in which
in the determination step, the repulsive force that acts between the object corresponding to a learning model in which a lower expected value is output for the same label and the object corresponding to a learning model in which a higher expected value is output in an opposite manner is determined.
(6) The information processing method according to any one of (2) to (5) described above, in which

in the determination step, motion information of each object is calculated by the physical simulation calculation on the basis of the physical characteristic determined for the object corresponding each piece of the training data, and

in the presentation step, each object is moved and displayed on a screen of a display device on the basis of the motion information calculated in the determination step.

(7) The information processing method according to (6) described above, further including:
an input step of inputting a user operation on the object displayed on the screen of the display device.
(7-1) The information processing method according to (7) described above, in which
the training data corresponding to the object for which a deletion operation is performed on the screen in the input step is excluded from a learning target of the machine learning model.
(8) The information processing method according to any one of (1) to (7) described above, in which
the characteristic of each piece of the training data is determined in the determination step and the evaluation result of the training data is presented in the presentation step each time the machine learning model is updated.
(9) An information processing system that performs processing related to training data to be used to train a machine learning model, the system including:

a determination unit that determines a characteristic of each piece of the training data on the basis of an inference result of the machine learning model for the training data; and

a presentation unit that presents an evaluation result of the training data based on the determined characteristic.

(10) The information processing system according to (9) described above, in which

the determination unit determines a physical characteristic of an object corresponding to each piece of the training data on the basis of the inference result of the machine learning model, and performs physical simulation calculation between objects each having the determined physical characteristic, and

the presentation unit presents the object corresponding each piece of the training data on the basis of a result of the physical simulation calculation.

(11) The information processing system according to claim (10) described above, in which
the determination unit determines the physical characteristic of the object corresponding to the training data on the basis of an expected value for each label output by the machine learning model for the training data.

(12) The information processing system according to (11) described above, in which
the determination unit determines mass, buoyancy, or a size of the object corresponding to the training data on the basis of the expected value for a correct answer label.

(12-1) The information processing system according to (12) described above, in which
the determination unit makes determination such that the object corresponding to the training data having a larger expected value for the correct answer label becomes heavier or larger and the object corresponding to the training data having a smaller expected value for the correct answer label becomes lighter or smaller.

(13) The information processing system according to (11) or (12) described above, in which
the determination unit determines at least one of attractive force or repulsive force that acts between the objects corresponding to each piece of the training data on the basis of the expected value for a correct answer label.

(13-1) The information processing system according to (13) described above, in which
the determination unit determines the attractive force that acts between the objects corresponding to pieces of the training data having the same label for which the expected value is high.

(13-2) The information processing system according to (13) or (13-1) described above, in which
the determination unit determines the repulsive force that acts between the object corresponding to a learning model in which a lower expected value is output for the same label and the object corresponding to a learning model in which a higher expected value is output in an opposite manner.

(14) The information processing system according to any one of (10) to (13) described above, in which

the determination unit calculates motion information of each object by the physical simulation calculation on the basis of the physical characteristic determined for the object corresponding each piece of the training data, and
the presentation unit moves and displays each object on a screen of a display device on the basis of the motion information calculated by the determination unit.

(15) The information processing system according to (14) described above, further including:
an input unit that inputs a user operation on the object displayed on the screen of the display device.

(15-1) The information processing system according to (15) described above, in which
the training data corresponding to the object for which a deletion operation is performed on the screen through the input unit is excluded from a learning target of the machine learning model.

(16) The information processing system according to (15) described above, in which
in response to a predetermined operation performed on the object displayed on the screen through the input unit, the presentation unit further presents detailed information related to the training data corresponding to the object.

(16-1) The information processing system according to (16) described above, further including:

a calculation unit that calculates a determination basis of inference by the machine learning model for the training data,
in which the presentation unit presents the detailed information including the determination basis calculated by the calculation unit.

(17) The information processing system according to any one of (9) to (16) described above, in which
the determination unit determines the characteristic of each piece of the training data and the presentation unit presents the evaluation result of the training data each time the machine learning model is updated.

(18) The information processing system according to any one of (9) to (17) described above, further including:

a first device that includes the determination unit; and
a second device that includes the presentation unit.

(19) The information processing system according to (18) described above, in which
the second device includes a display device that displays, on a screen, the evaluation result of the training data based on the determined characteristic, and an input unit that inputs a user operation on the screen.

(20) The information processing system according to (18) or (19) described above, further including:

a third device that includes a model update unit that updates the machine learning model by training using the training data.

REFERENCE SIGNS LIST

| | |
|---|---|
| 100 | Learning system |
| 101 | Learning data holding unit |
| 102 | Model update unit |
| 103 | Model parameter holding unit |
| 111 | Inference unit |
| 112 | Data input processing unit |
| 120 | Learning data evaluation unit |
| 121 | Physical simulation calculation unit |
| 122 | Evaluation result presentation unit |
| 123 | Determination basis calculation unit |
| 130 | Learning data provision unit |
| 1500 | Information processing system |
| 1501 | CPU |
| 1502 | ROM |
| 1503 | RAM |
| 1504 | Host bus |
| 1505 | Bridge |
| 1506 | Expansion bus |
| 1507 | Interface unit |
| 1508 | Input device |
| 1509 | Output device |
| 1510 | Storage device |
| 1511 | Drive |
| 1512 | Removable recording medium |
| 1513 | Communication device |

**Claims**

1. An information processing method that performs processing related to training data to be used to train a machine learning model, the information processing method comprising:

   a determination step of determining a characteristic of each piece of the training data on a basis of an inference result of the machine learning model for the training data; and
   a presentation step of presenting an evaluation result of the training data based on the determined characteristic.

2. The information processing method according to claim 1, wherein

   in the determination step, a physical characteristic of an object corresponding to each piece of the training data is determined on a basis of the inference result of the machine learning model, and physical simulation calculation between objects each having the determined physical characteristic is performed, and
   in the presentation step, the object corresponding each piece of the training data is presented on a basis of a result of the physical simulation calculation.

3. The information processing method according to claim 2, wherein
   in the determination step, the physical characteristic of the object corresponding to the training data is determined on a basis of an expected value for each label output by the machine learning model for the training data.

4. The information processing method according to claim 3, wherein

in the determination step, mass, buoyancy, or a size of the object corresponding to the training data is determined on a basis of the expected value for a correct answer label.

5. The information processing method according to claim 3, wherein
in the determination step, at least one of attractive force or repulsive force that acts between the objects corresponding to each piece of the training data is determined on a basis of the expected value for a correct answer label.

6. The information processing method according to claim 2, wherein

in the determination step, motion information of each object is calculated by the physical simulation calculation on a basis of the physical characteristic determined for the object corresponding each piece of the training data, and
in the presentation step, each object is moved and displayed on a screen of a display device on a basis of the motion information calculated in the determination step.

7. The information processing method according to claim 6, further comprising:
an input step of inputting a user operation on the object displayed on the screen of the display device.

8. The information processing method according to claim 1, wherein
the characteristic of each piece of the training data is determined in the determination step and the evaluation result of the training data is presented in the presentation step each time the machine learning model is updated.

9. An information processing system that performs processing related to training data to be used to train a machine learning model, the information processing system comprising:

a determination unit that determines a characteristic of each piece of the training data on a basis of an inference result of the machine learning model for the training data; and
a presentation unit that presents an evaluation result of the training data based on the determined characteristic.

10. The information processing system according to claim 9, wherein

the determination unit determines a physical characteristic of an object corresponding to each piece of the training data on a basis of the inference result of the machine learning model, and performs physical simulation calculation between objects each having the determined physical characteristic, and
the presentation unit presents the object corresponding each piece of the training data on a basis of a result of the physical simulation calculation.

11. The information processing system according to claim 10, wherein
the determination unit determines the physical characteristic of the object corresponding to the training data on a basis of an expected value for each label output by the machine learning model for the training data.

12. The information processing system according to claim 11, wherein
the determination unit determines mass, buoyancy, or a size of the object corresponding to the training data on a basis of the expected value for a correct answer label.

13. The information processing system according to claim 11, wherein
the determination unit determines at least one of attractive force or repulsive force that acts between the objects corresponding to each piece of the training data on a basis of the expected value for a correct answer label.

14. The information processing system according to claim 10, wherein

the determination unit calculates motion information of each object by the physical simulation calculation on a basis of the physical characteristic determined for the object corresponding each piece of the training data, and
the presentation unit moves and displays each object on a screen of a display device on a basis of the motion information calculated by the determination unit.

15. The information processing system according to claim 14, further comprising:
an input unit that inputs a user operation on the object displayed on the screen of the display device.

**16.** The information processing system according to claim 15, wherein
in response to a predetermined operation performed on the object displayed on the screen through the input unit, the presentation unit further presents detailed information related to the training data corresponding to the object.

**17.** The information processing system according to claim 9, wherein
the determination unit determines the characteristic of each piece of the training data and the presentation unit presents the evaluation result of the training data each time the machine learning model is updated.

**18.** The information processing system according to claim 9, further comprising:

a first device that includes the determination unit; and
a second device that includes the presentation unit.

**19.** The information processing system according to claim 18, wherein
the second device includes a display device that displays, on a screen, the evaluation result of the training data based on the determined characteristic, and an input unit that inputs a user operation on the screen.

**20.** The information processing system according to claim 18, further comprising:
a third device that includes a model update unit that updates the machine learning model by training using the training data.

FIG. 1

EP 4 375 890 A1

# FIG. 2

MACHINE LEARNING MODEL 200

LABEL 1: HORSE

LABEL 2: CAT

LABEL 3: DOG

LABEL 4: COW

LABEL 5: BIRD

IMAGE

# FIG. 3

| LABEL<br>TRAINING COUNT | 1<br>(HORSE) | 2<br>(CAT) | 3<br>(DOG: GROUND TRUTH) | 4<br>(COW) | 5<br>(BIRD) |
|---|---|---|---|---|---|
| ⋮ | ... | ... | ... | ... | ... |
| E1 | 0.5 | 0.2 | 0.1 | 0.1 | 0.1 |
| ⋮ | ... | ... | ... | ... | ... |
| E2 | 0.1 | 0.3 | 0.5 | 0.1 | 0.0 |
| ⋮ | ... | ... | ... | ... | ... |
| E3 | 0.0 | 0.1 | 0.8 | 0.1 | 0.0 |
| ⋮ | ... | ... | ... | ... | ... |

# FIG. 4

| LABEL / TRAINING COUNT | 1<br>(HORSE) | 2<br>(CAT) | 3<br>(DOG: GROUND TRUTH) | 4<br>(COW) | 5<br>(BIRD) |
|---|---|---|---|---|---|
| ⋮ | ... | ... | ... | ... | ... |
| E1 | 0.5<br>(ATTRACTIVE FORCE) | 0.2 | 0.1<br>(LIGHT) | 0.1<br>(REPULSIVE FORCE) | 0.1<br>(REPULSIVE FORCE) |
| ⋮ | ... | ... | ... | ... | ... |
| E2 | 0.1<br>(REPULSIVE FORCE) | 0.3<br>(ATTRACTIVE FORCE) | 0.5 | 0.1<br>(REPULSIVE FORCE) | 0.0<br>(REPULSIVE FORCE) |
| ⋮ | ... | ... | ... | ... | ... |
| E3 | 0.0<br>(REPULSIVE FORCE) | 0.1<br>(REPULSIVE FORCE) | 0.8<br>(HEAVY) | 0.1<br>(REPULSIVE FORCE) | 0.0<br>(REPULSIVE FORCE) |
| ⋮ | ... | ... | ... | ... | ... |

# FIG. 5

OBJECT CORRESPONDING TO
j-TH TRAINING DATA

$D_j$

ATTRACTIVE FORCE

OBJECT CORRESPONDING TO
i-TH TRAINING DATA

$D_i$

NO ATTRACTIVE FORCE
AND NO REPULSIVE FORCE

REPULSIVE FORCE

$D_k$

OBJECT CORRESPONDING TO
k-TH TRAINING DATA

FIG. 6

## FIG. 7

# FIG. 8

AUTOMATED DELETION TARGET

AUTOMATED DELETION TARGET

801

# FIG. 9

# FIG. 10

# FIG. 11

# FIG. 12

1201

- DETAILED INFORMATION OF TRAINING DATA
- EVALUATION RESULT BASED ON DIFFERENT METHOD

# FIG. 13

FILE NAME: n01234567.jpg
ESTIMATE LABEL: 3 (DOG)
EXPECTED VALUE FOR EACH LABEL: 0.1/0.3/0.5/0.1/0.0
ORIGINAL IMAGE:

1301

XAI(Grad-CAM):

XAI(LIME):

# FIG. 14

```
                    ┌─────────────────┐
                    │      START      │
                    └─────────────────┘
                             │
                             ▼
S1401 ──┌──────────────────────────────────────────────┐
        │        RECEIVE MODEL UPDATE NOTIFICATION       │
        └──────────────────────────────────────────────┘
                             │
                             ▼
S1402 ──◇──────────────── IS THERE TARGET DATA? ──────────────◇──── No
                             │ Yes                                    │
                             ▼                                        │
S1403 ──┌──────────────────────────────────────────────┐            │
        │              SELECT TARGET DATA                │            │
        └──────────────────────────────────────────────┘            │
                             │                                        │
                             ▼                                        │
S1404 ──┌──────────────────────────────────────────────┐            │
        │     PERFORM forward CALCULATION ON TARGET DATA  │            │
        └──────────────────────────────────────────────┘            │
                             │                                        │
                             ▼                                        │
S1405 ──┌──────────────────────────────────────────────┐            │
        │  DETERMINE PHYSICAL CHARACTERISTIC OF TARGET DATA │          │
        └──────────────────────────────────────────────┘            │
                             │                                        │
                             ▼                                        │
S1406 ──┌──────────────────────────────────────────────┐            │
        │        PERFORM PHYSICAL SIMULATION CALCULATION  │◄───────────┘
        └──────────────────────────────────────────────┘
                             │
                             ▼
S1407 ──┌──────────────────────────────────────────────┐
        │                  DISPLAY GUI                    │
        └──────────────────────────────────────────────┘
                             │
                             ▼
                    ┌─────────────────┐
                    │       END       │
                    └─────────────────┘
```

# FIG. 15

INFORMATION PROCESSING SYSTEM 1500

CPU 1501

ROM 1502

RAM 1503

HOST BUS 1504

BRIDGE 1505

EXPANSION BUS 1506

INTERFACE UNIT 1507

INPUT DEVICE 1508

OUTPUT DEVICE 1509

STORAGE DEVICE (SSD/HDD) 1510

DRIVE 1511

COMMUNICATION DEVICE 1513

REMOVABLE RECORDING MEDIUM 1512

EP 4 375 890 A1

## INTERNATIONAL SEARCH REPORT

| International application No. |
| --- |
| **PCT/JP2022/003897** |

| A. | CLASSIFICATION OF SUBJECT MATTER |
| --- | --- |

*G06N 20/00*(2019.01)i; *G16Z 99/00*(2019.01)i
FI:  G06N20/00 130; G16Z99/00

According to International Patent Classification (IPC) or to both national classification and IPC

| B. | FIELDS SEARCHED |
| --- | --- |

Minimum documentation searched (classification system followed by classification symbols)

G06N20/00; G16Z99/00; G06N3/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2021-60692 A (TOSHIBA CORP.) 15 April 2021 (2021-04-15) paragraphs [0007]-[0106], fig. 8-11 | 1, 8-9, 17-20 |
| A | | 2-7, 10-16 |
| A | JP 2020-140226 A (MITSUBISHI UFJ TRUST & BANKING CORP.) 03 September 2020 (2020-09-03) entire text, all drawings | 1-20 |
| A | GUMELAR A. B. An Anatomy of Machine Learning Data Visualization. 2019 International Seminar on Application for Technology of Information and Communication. 2019, [retrieved on 13 April 2022], Internet :<URL:https://ieeexplore.ieee.org/abstract/document/8884340> entire text, all drawings | 1-20 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **13 April 2022** | **26 April 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
**Information on patent family members**

International application No.

**PCT/JP2022/003897**

| Patent document cited in search report | | | Publication date (day/month/year) | Patent family member(s) | Publication date (day/month/year) |
|---|---|---|---|---|---|
| JP | 2021-60692 | A | 15 April 2021 | (Family: none) | |
| JP | 2020-140226 | A | 03 September 2020 | (Family: none) | |

Form PCT/ISA/210 (patent family annex) (January 2015)

**EP 4 375 890 A1**

## REFERENCES CITED IN THE DESCRIPTION

**Patent documents cited in the description**

- JP 2020197875 A
- JP 2018194919 A